# EUROPEAN PATENT SPECIFICATION

(11) **EP 2 418 913 B1**
(45) Date of publication and mention of the grant of the patent: **20.04.2016**
(21) Application number: 09842883.2
(22) Date of filing: 06.08.2009
(51) Int. Cl.: H04W 4/08, H04W 8/18

(54) **METHODS AND SYSTEM FOR JOINING GROUP SESSION WITH PRE-DEFINED JOINING**
VERFAHREN UND SYSTEM ZUM SICHANSCHLIESSEN AN EINE GRUPPENSITZUNG MIT VORDEFINIERTEM SICHANSCHLIESSEN
PROCÉDÉS ET SYSTÈME PERMETTANT DE PARTICIPER À UNE SESSION DE GROUPE AVEC UNE PARTICIPATION PRÉDÉFINIE

(30) Priority: 10.04.2009 CN 200910127881
(43) Date of publication of application: 15.02.2012
(73) Proprietor: ZTE Corporation, Shenzhen, Guangdong 518057 (CN)
(72) Inventor: LI, Fengjun, Guangdong 518057 (CN)
(74) Representative: Gevers Patents
(86) International application number: PCT/CN2009/073124
(87) International publication number: WO 2010/115322

(56) References cited:
- CN-A- 1 773 919
- CN-A- 101 313 493
- US-A1- 2006 031 294
- US-A1- 2007 189 203
- "OMA Converged IP Messaging System Description ; OMA-TS-CPM_System_Description-V1_0-2009040 7-D", OMA-TS-CPM_SYSTEM_DESCRIPTION-V1_0-2009040 7-D, OPEN MOBILE ALLIANCE (OMA), 4330 LA JOLLA VILLAGE DR., SUITE 110 SAN DIEGO, CA 92122 ; USA , no. 1.0 7 April 2009 (2009-04-07), pages 1-106, XP064049609, Retrieved from the Internet: URL:ftp/Public_documents/COM/COM-CPM/Perma nent_documents/ [retrieved on 2009-04-07]
- NOKIA SIEMENS NETWORKS ET AL: "CPM Conversations ; OMA-MWG-CPM-2008-0197-INP_CPM_Conversation s", OMA-MWG-CPM-2008-0197-INP_CPM_CONVERSATION S, OPEN MOBILE ALLIANCE (OMA), 4330 LA JOLLA VILLAGE DR., SUITE 110 SAN DIEGO, CA 92122 ; USA , 8 April 2008 (2008-04-08), pages 1-13, XP064046006, Retrieved from the Internet: URL:ftp/Public_documents/COM/COM-CPM/2008/ [retrieved on 2008-04-08]

## Description

### TECHNICAL FIELD

The present invention relates to the field of communications, and particularly to a realization method and system for participating in a predefined group session, and a realization method for participating in a session.

### BACKGROUND

At present, under the trend that Internet is developing to be Internet Protocol (IP)-based, conventional telecommunication services are being gradually transferred to a next generation IP-based network, for instance, standardization organizations, such as the 3rd Generation Partnership Project (3GPP), the 3rd Generation Partnership Project 2 (3GPP2), and the Telecommunications and Internet Converged Service and Protocols for Advanced Networking (TISPAN), take the Session Initial Protocol (SIP) as the basic protocol for the next generation core network, and additionally, an IP network employing the SIP is gradually becoming the network foundation for service application.

The document entitled "OMA Converged IP Messaging System Description ; OMA-TS-CPM_System_Description-V1_0-20090407-D" describes the system concepts of the CPM Enabler, including: the CPM Participating Function and the CPM Controlling Function SHALL support the CPM Conversation Identity indication in order to link standalone CPM Messages and CPM Session Invitations to CPM Conversation the CPM Client.

There have appeared group sessions in the SIP-based network. Typically, during the realization process of a group session, it is required that one of the several terminals participating in the session initiates the session (may be realized by calling other terminals) so that all the other terminals can participate in the session, and the initiated session is allocated with a unique session identifier. However, the session-corresponding identifier reserved on a terminal is different from that reserved on another terminal, that is, for the terminals, there is no uniform identifier on different terminals corresponding to the session. As a consequence, if one of the terminals participating in the current session desires to initiate a same session after the current session is completed, the same session initiated by a different session initiator will be deemed by other terminals as a new one, which influences the repeated initiation of the session.

In order to address the aforementioned problem caused by nonuniform identifiers, it has been proposed to require the terminals participating in a session to have a uniform identifier. However, no solution has been proposed yet for a predefined group session to enable users to participate in a group session on the premise that the group session has a uniform identifier.

### SUMMARY

Considering the problem that the participation of a user in a group session cannot be realized by related technology on the premise that the group session has a uniform identifier, the present invention is proposed with a main target of providing a realization method and system for participating in a predefined group session and a realization method for participating in a session.

The present invention provides a realization method for participating in a predefined group session, which comprises: receiving by a controller function server a group session participation request sent by a terminal, wherein the group session participation request carries a conversation identifier and a contribution identifier; and
sending the conversation identifier and the contribution identifier to other terminals which participate in a predefined group session subsequently by the controller function server;
characterized in that, the method further comprises:
receiving, by the other terminals, the conversation identifier and the contribution identifier and updating, by the other terminals, a local conversation identifier and a local contribution identifier to be the ones received by each of the other terminals
and in that, after the controller function server receives the group session participation request sent by the terminal, the method further comprises:
is tne controller function server determines that the terminal is a first terminal that participates in the predefined group and the group session participation request received by the controller function server is of a participative group type, storing the conversation identifier and the contribution identifier contained in the group session participation request by the controller function server, and, if requesting to participate in the predefined group session, the other terminals send a group session participation request according to the updated conversation identifier and contribution identifier so as to participate in the same group session.

The present invention also provides a realization method for participating in a session, which comprises: sending a conversation identifier and a contribution identifier to a terminal participating in a session by a system; and
sending the conversation identifier and the contribution identifier by the system to the terminal if the terminal exits from the session and then re-participates in the session.

The present invention provides a realization system for participating in a predefined group session, the system comprising: a receiving module, which is set at a controller function server side to receive a group session participation request sent by a terminal, wherein the group session participation request carries a conversation identifier and a contribution identifier; and
a sending module, which is set at the controller function server side to send the conversation identifier and the contribution identifier to other terminals participating in a predefined group session subsequently;
characterized in that, each of the other terminals receives the conversation identifier and the contribution identifier and update a local conversation identifier and a local contribution identifier to be the ones received;
and in that the receiving module is further configured to:
if determining that the terminal is a first terminal that participates in the predefined group and the group session participation request received by the receiving module is of a participative group type, storing the conversation identifier and the contribution identifier contained in the group session participation request, and, if requesting to participate in the predefined group session, the other terminals send a group session participation request according to the updated conversation identifier and contribution identifier so as to participate in the same group session.

The present invention further provides a realization method for participating in a predefined group session, which comprises: sending a group session participation request to a participant function server by a terminal, wherein the group session participation request carries an identifier including a group session identifier, a conversation identifier and a contribution identifier;
checking legality of the group session participation request by the participant function server, and rejecting the group session participation request if a result of the check shows the group session participation request is illegal, otherwise, forwarding the group session participation request to a controller function server to which a predefined group attaches;
storing the conversation identifier and the contribution identifier by the controller function server and then returning a success response to the participant function server and the terminal if the controller function server determines that a group corresponding to the group session participation request is a participative group from a group server and authenticates the group session participation request successfully; and
if other subsequent terminals require to participate in the predefined group session by sending a group session participation request, sending respective group session participation request of the other terminals to the controller function server, and returning a conversation identifier and a contribution identifier by the controller function server to the other terminals via a response message if the controller function server determines there are the conversation identifier and the contribution identifier corresponding to the existing group session and authenticates the group session participation request successfully;
characterized in that, the method further comprises:
receiving the conversation identifier and the contribution identifier and updating a local conversation identifier and a local conversation identifier to be the ones received by each of the other terminals;
and in that the process of storing the conversation identifier and the contribution identifier by the controller function server further comprises:
   if the controller function server determines that the terminal is a first terminal that participates in the predefined group and the group session participation request received by the controller function server is of a participative group type, storing the conversation identifier and the contribution identifier contained in the group session participation request by the controller function server, and, if requesting to participate in the predefined group session, the other terminals send a group session participation request according to the updated conversation identifier and contribution identifier so as to participate in the same group session.

By means of the technical solution above of the present invention, a uniform identifier of a group session is configured for the terminals so that the terminals can participate a predefined group session correctly, trace an established session accurately or initiate a same session repeatedly according to the uniform identifier, and therefore the present invention fill the gaps in the related technology.

### BRIEF DESCRIPTION OF THE DRAWING

The drawings illustrated herein are provided for a better understanding of the present invention and form one part of the present application, and the exemplary embodiments of the present invention and the description thereof are used for explaining the present invention but not limiting the present invention. In the drawings:
Fig. 1 is a schematic diagram illustrating the service environment of participating a predefined group according to an embodiment of the present invention;
Fig. 2 is a flow chart of the realization method for participating in a predefined group session according to an embodiment of the present invention;
Fig. 3 is a signaling flow chart of an example of the realization method for participating in a predefined group session according to an embodiment of the present invention;
Fig. 4 is a block diagram of the realization system for participating in a predefined group session according to an embodiment of the present invention.

### DETAILED DESCRIPTION

### Function summary

Aiming at the problem existing in the related technology that there has proposed no solution to realize the participation of a user in a group session on the premise of unifying the identifier of the group session of terminals, the present invention proposes that a system distributes a uniform identifier for the terminals participating in a group session to enable the participation of the terminals in the group session with the uniform identifier and therefore fill the gaps in the related technology. The technical solution of the present invention is described below in detail.

### Method embodiment

According to an embodiment of the present invention, there is first provided a realization method for participating in a predefined group session.

In order to address the problems existing in the related technology, it is required during the realization process of the present invention that a system sends a conversation identifier and a contribution identifier to the terminals which participate in a session, wherein the conversation identifier and the contribution identifier are pre-stored by the system, that is, the session is pre-established; then, the system sends the same conversation identifier and the same contribution identifier to both the terminals exiting from the session and the terminals participating in the session for the first time (that is, the conversation identifier and the contribution identifier are pre-stored by the system).

By the processing flow, the terminals can participate in sessions of multiple types, and can trace or repeatedly initiate a same session according to the uniform identifier.

Specifically, for the predefined group session, an embodiment provides a realization method for participating in a predefined group session.

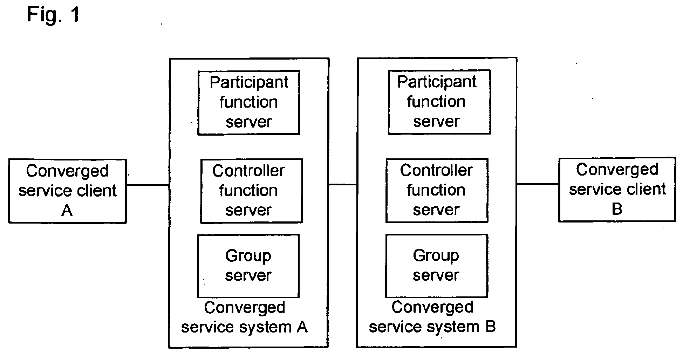

Fig. 1 is a schematic diagram illustrating the service environment of participating the predefined group corresponding to the realization method for participating in a predefined group session according to an embodiment of the present invention. Fig. 1 shows a converged service client A and a converged service system A to which the converged service client A attaches as well as a converged service client B and a converged service system B to which the converged service client B attaches. The converged service system A and B both comprise a participant function server, a controller function server and a group server respectively, wherein
the participant function server is used for authenticating a session request to avoid that the session request is sent by an illegal user;
the controller function server is used for authenticating a group session request to avoid that the group session request is sent by an illegal user; and
the group server is used for storing configuration information of a predefined group session and an identifier indicating whether a group is a participative one.

The converged service client for a group session service (e.g. the converged service clients A and B) participates in the group session according to user operation.

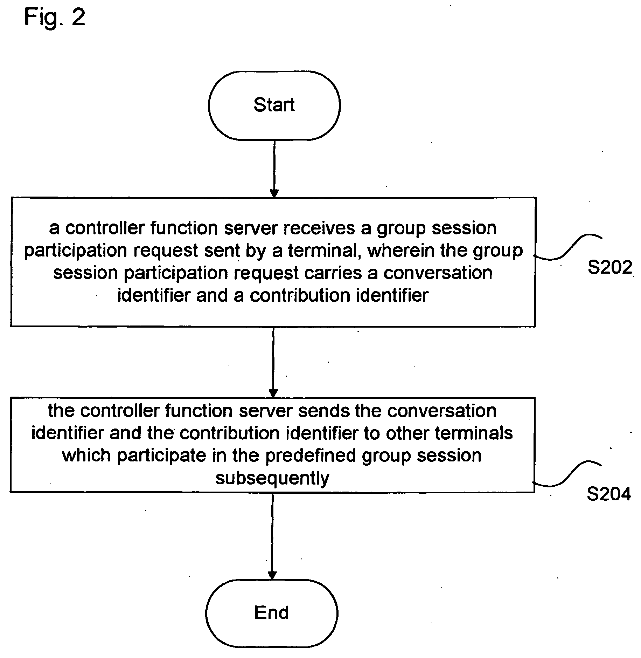

Fig. 2 is a flow chart of the realization method for participating in a predefined group session according to an embodiment of the present invention. The method can realize, in the system shown in Fig. 1, a participation in a group session and endow the terminals participating in the session with a uniform identifier so as to initiate the same session repeatedly or trace the session. It should be noted that the steps described in the following method can execute in, for example, a computer system consisting of a group of computer-executable instructions, moreover, although a logic order is shown in Fig. 2, the shown or described steps may be executed in different orders in some cases.

As shown in Fig. 2, the realization method for participating in a predefined group session according to an embodiment of the present invention comprises the following steps S202 and S204, wherein the terminal mentioned below refers to a converged service client of a group session user.

The specific processing procedures shown in Fig. 2 are as follows:
step S202, a controller function server receives a group session participation request sent by a terminal, wherein the group session participation request carries a conversation identifier and a contribution identifier which may be generated by the terminal, furthermore, the request may further carry an identifier of the group session; and
step S204, the controller function server sends the conversation identifier and the contribution identifier to other terminals which participate in the predefined group session subsequently so as to enable the other terminals to participate in the predefined group session or trace the group session or re-initiate a same group session.

The other terminals which participate in the group session subsequently refer to those participating in the group session for the first time since the establishment of the session or those re-participating in the predefined group session after exiting from the predefined group session.

Wherein, before the controller function server receives the group session participation request, the terminal participating the predefined group session can acquire the identifier information of the group session from a notification message, and the participant function server can receive the group session participation request sent by the terminal and authenticate the terminal according to the group session participation request; and the participant function server sends the group session participation request to the controller function server if the result of the authentication shows that the terminal is legal.

That is, in order to guarantee security, the terminal may first send the group session participation request to the participant function server to authenticate the legality of the terminal. If the result of the authentication from the participant function server shows that the terminal is illegal, the group session participation request is rejected.

Moreover, before sending the conversation identifier and the contribution identifier to other terminals, the controller function server authenticates the terminal according to the group session participation request to make a determination on whether to allow the participation of the terminal in the group session. If the result of the determination is positive, the controller function server stores the conversation identifier and the contribution identifier and then sends the conversation identifier and the contribution identifier to the other terminals.

Specifically, the controller function server may determine that the group is a participative group from a group server and authenticate the session request of the terminal, store the received conversation identifier and contribution identifier if the authentication succeeds, and then return a success response to the participant function server and the terminal.

Moreover, if it is determined that the participation of the terminal in the predefined group session is allowed, the controller function server may further return a success response indicative of the successful participation of the terminal in the predefined group session to the terminal, and the controller function server may further optionally send the success response to the participant function server.

Preferably, after the controller function server sends the conversation identifier and the contribution identifier to the other terminals, the other terminals can receive the conversation identifier and the contribution identifier, and update respective local conversation identifier and local contribution identifier to be the received ones, that is, replace the conversation identifier and conversation identifier respectively generated by the terminals themselves with the received ones.

After the other terminals finish the update, if requesting to participate in the predefined group session, the terminals can send a group session participation request according to the updated conversation identifier and contribution identifier so as to participate in the same group session.

Moreover, the participant function server and the controller function server may also authenticate the group session participation requests sent by the other terminals, which participate in the session subsequently, to guarantee the security of services.

The present invention will be described with reference to a specific embodiment.

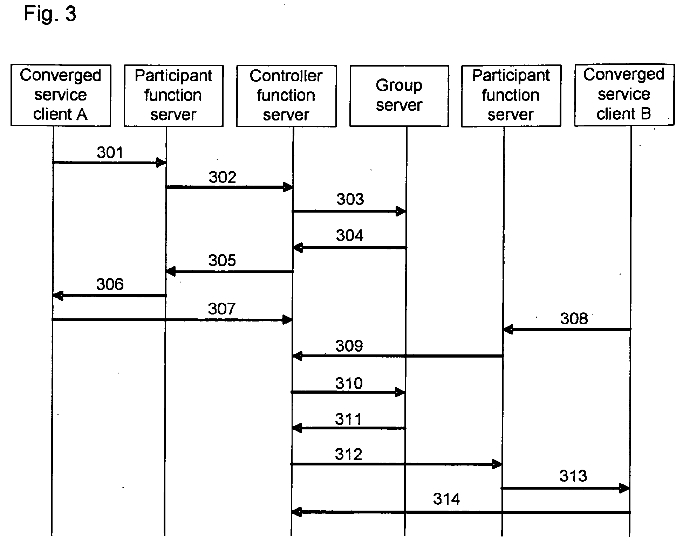

Assuming the service environment of the predefined group is as shown in Fig. 1, the converged service client participates in a group session according to user operation and generates a conversation identifier and a contribution identifier, a participant function server authenticates messages sent or received by the converged service client to avoid the receiving/reception of illegal messages, a controller function server and a group server interact with each other to determine whether or not a group is a participative group and authenticate and control the group session, and the group server stores related configuration information of the group and the information indicating that whether a group is a participative group. The service flow of a participation in a predefined participative group is shown in Fig. 3.

As show in Fig. 3, the specific processing comprises the following steps that:
step 301: a converged service client A sends a request 'invite' (corresponding to the aforementioned group session participation request) to the participant function server to which the converged service client A attaches, wherein in the message 'invite', a value of 'request-ur1' is a group identifier, a value of 'authenticated id' is the 'sip uri' of the converged service client A, and a corresponding conversation identifier (conversation id) and a contribution identifier (contribution id) are carried in Common Profile for Instant Messaging (CPIM) format packaged by Multipurpose Internet Mail Extensions (MIME);
step 302: the participant function server authenticates the sip uri corresponding to the authenticated id to determine whether the user has the right to send a session request, and forwards the session request to the controller function server to which the group identifier attaches if the authentication succeeds, otherwise, rejects the session request;
step 303: the controller function server authenticates the group identifier to determine whether the group identifier is a served one, if yes, the controller function server sends the request to the group server using the XML Configuration Access Protocol (XCAP) to acquire configuration information of the group corresponding to the group identifier, otherwise, rejects the request;
step 304: the group server returns the configuration information of the group containing the information indicating whether the group is a participative group.
step 305: the controller function server searches for a conversation id and a contribution id corresponding to the group in the case that the group is a participative group, if there exists no conversation id or contribution id corresponding to the group, the controller function server takes the conversation id and the contribution id carried by the converged service client A as the identifier of the group session, and then returns 200 ok response to the participant function server;
step 306: the participant function server forwards the 200 ok response to the converged service client A;
step 307: the converged service client A sends an acknowledge (ACK) message to the controller function server to establish a media channel between the converged service client and the controller function server;
step 308: a converged service client B sends a message 'invite' to the participant function server to which the converged service client B attaches, wherein in the message 'invite', the value of'request-url' is a group identifier, the value of authenticated id' is the sip uri of the converged service client B, and a new generated conversation identifier (conversation id) and a contribution identifier (contribution id) are carried in the CPIM format packaged by MIME;
step 309: the participant function server authenticates the authenticated id of the converged service client B, rejects the request if the result of the authentication shows that the converged service client B is illegal, otherwise, forwards the request to the controller function server to which the group identifier attaches according to the group identifier;
step 310: the controller function server determines whether the group identifier is a served target, if is, the controller function server forwards the request to the group server using the XCAP to acquire configuration information of the group, otherwise, rejects the request;
step 311: the group server returns the configuration information of the group containing the information indicating whether the group is a participative group;
step 312: the controller function server determines whether the group session corresponding to the group identifier has a conversation id and a contribution id, if so, carries the conversation id and the contribution id in the 200 ok response in an MIME-packaged CPIM format and sends the response to the participant function server;
step 313: the participant function server forwards the 200 ok response to the converged service client B, and the converged service client B replaces the conversation id and contribution id generated by itself with the received ones and stores the information locally (or the terminal may not store the information and directly participate in the session using the conversation id and contribution id fed back from the system);
step 314: the converged service client B sends an ACK message to the controller function server to establish a media channel between the converged service client B and the controller function server.

By means of the process flow above, a uniform identifier of a group session is configured for the terminals so that the terminals can participate a predefined group session correctly, trace an established session accurately or initiate a same session repeatedly according to the uniform identifier, and therefore the present invention fill the gaps in the related technology.

### System embodiment

In this embodiment there is provided a realization system for participating in a predefined group session.

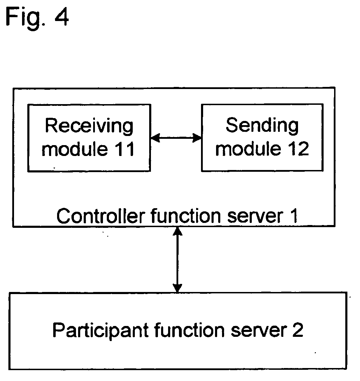

Fig. 4 is a block diagram of the realization system for participating in a predefined group session according to an embodiment of the present invention. As shown in Fig. 4, the realization system for participating in a predefined group session according to this embodiment comprises a controller function server 1 and a participant function server 2.

The controller function server 1 comprises: a receiving module 11 for receiving a group session participation request sent by a terminal, wherein the group session participation request carries a conversation id and a contribution id and may further carry an identifier of the group session; and a sending module 12 which is connected with the receiving module 11 for sending the conversation id and the contribution id to other terminals participating in the predefined group session subsequently, wherein the identifier of the group session is corresponding to the predefined group session.

The participant function server 2 is used for receiving the group session participation request, authenticating the terminal according to the group session participation request, and sending the group session participation request to the receiving module if a result of the authentication shows that the terminal is legal.

The terminal and the other terminals are converged service clients of the group session users.

The system can also execute the processing shown in Fig. 2 and Fig. 3 which is already described in detailed, so no more repeated description is given here.

By using the system, a uniform identifier of a group session is configured for the terminals, so an established session can be always traced accurately, and a same session can be initiated repeatedly according to the uniform identifier, therefore, the gaps in related technology is filled.

In conclusion, by means of the technical solution of the present invention, a uniform identifier of a group session is configured for the terminals so that the terminals can participate in a predefined group session correctly, trace an established session accurately, and initiate a same session repeatedly according to the uniform identifier, therefore the gaps in related technology is filled.

Apparently, it should be understood by those skilled in the art that the modules or steps of the present invention can be realized by a general computing device, centralized on a single computing device or distributed on a network consisting of multiple computing devices, and optionally realized by program codes executable for computing devices; the modules or steps can be therefore stored in a storage device to be executed by a computing device or manufactured into integrated circuit modules respectively, or some of the modules or steps are manufactured into a single integrated circuit module. Thus, the present invention is not limited to any special combination of hardware and software.

The mentioned above is only preferred embodiments of the present invention but not limitation for the present invention, various modifications and variations can be devised by those skilled in the art, and it should be understood that any modification, equivalent and improvement devised without departing from the scope of the present invention should belong to the protection scope of the present invention.

## Claims

1. A realization method for participating in a predefined group session, the method comprising:
receiving (S202) by a controller function server (1) a group session participation request sent by a terminal, wherein the group session participation request carries a conversation identifier and a contribution identifier; and
sending (S204) the conversation identifier and the contribution identifier to other terminals which participate in a predefined group session subsequently by the controller function server (1);
**characterized in that**, the method further comprises:
receiving, by the other terminals, the conversation identifier and the contribution identifier and updating, by the other terminals, a local conversation identifier and a local contribution identifier to be the ones received by each of the other terminals;
and **in that**, after the controller function server (1) receives the group session participation request sent by the terminal, the method further comprises:
if the controller function server (1) determines that the terminal is a first terminal that participates in the predefined group and the group session participation request received by the controller function server (1) is of a participative group type, storing the conversation identifier and the contribution identifier contained in the group session participation request by the controller function server (1), and, if requesting to participate in the predefined group session, the other terminals send a group session participation request according to the updated conversation identifier and contribution identifier so as to participate in the same group session.

2. The method according to claim 1, before the controller function server (1) receives the group session participation request, the method further comprising:
receiving the group session participation request sent by the terminal and authenticating the terminal according to the group session participation request by a participant function server (2); and
sending the group session participation request to the controller function server (1) by the participant function server (2) if a result of the authentication shows the terminal is legal.

3. The method according to claim 1, before the controller function server (1) sends the conversation identifier and the contribution identifier to the other terminals, the method further comprising:
authenticating the terminal by the controller function server (1) according to the group session participation request so as to make a determination on whether to allow the participation of the terminal in the predefined group session; and
storing the conversation identifier and the contribution identifier by the controller function server (1) if the result of the determination is that the participation of the terminal in the predefined group session is allowed so that the conversation identifier and the contribution identifier can be sent to the other terminals subsequently.

4. The method according to claim 3, if the result of the determination is that the participation of the terminal in the predefined group session is allowed, the method further comprising:
returning a success response indicative of the successful participation of the terminal in the predefined group session to the terminal by the controller function server (1).

5. The method according to claim 1, after the controller function server (1) receives the group session participation request sent by the terminal, the method further comprises:
if the terminal is not the first terminal that participates in the predefined group session and/or the group session participation request received by the controller function server is not of a participative group type, ignoring the conversation identifier and the contribution identifier contained in the group session participation request by the controller function server (1).

6. The method according to claim 1, after the other terminals complete the update, the method further comprising:
if any one of the other terminals desires to participate in the predefined participative group session, sending a group session participation request according to the updated conversation identifier and contribution identifier by the one which desires to.

7. The method according to claim 1, wherein the controller function server (1) sends the conversation identifier and the contribution identifier to the terminal if the terminal participates in the predefined group session repeatedly.

8. The method according to any one of claims 1-7, wherein the terminal and the other terminals are converged service clients of group session users.

9. The method according to any one of claims 1-7, wherein the group session participation request sent by the terminal further comprises an identifier of the group session.

10. The method according to any one of claims 1-7, wherein the other terminals participating in the session subsequently are the ones participating in the predefined group session for a first time or the ones re-participating in the predefined group session after exiting from the predefined group session.

11. A realization system for participating in a predefined group session, the system comprising:
a receiving module (11), which is set at a controller function server (1) side to receive a group session participation request sent by a terminal, wherein the group session participation request carries a conversation identifier and a contribution identifier; and
a sending module (12), which is set at the controller function server (1) side to send the conversation identifier and the contribution identifier to other terminals participating in a predefined group session subsequently;
**characterized in that**, each of the other terminals receives the conversation identifier and the contribution identifier and update a local conversation identifier and a local contribution identifier to be the ones received;
and **in that** the receiving module (11) is further configured to:
if determining that the terminal is a first terminal that participates in the predefined group and the group session participation request received by the receiving module (11) is of a participative group type, storing the conversation identifier and the contribution identifier contained in the group session participation request, and, if requesting to participate in the predefined group session, the other terminals send a group session participation request according to the updated conversation identifier and contribution identifier so as to participate in the same group session.

12. The system according to claim 11, further comprising:
a participant function server (2), used for receiving the group session participation request, authenticating the terminal according to the group session participation request, and sending the group session participation request to the receiving module if a result of the authentication shows the terminal is legal.

13. A realization method for participating in a predefined group session, comprising:
sending a group session participation request to a participant function server (2) by a terminal, wherein the group session participation request carries an identifier including a group session identifier, a conversation identifier and a contribution identifier;
checking legality of the group session participation request by the participant function server (2), and rejecting the group session participation request if a result of the check shows the group session participation request is illegal, otherwise, forwarding the group session participation request to a controller function server (1) to which a predefined group attaches;
storing the conversation identifier and the contribution identifier by the controller function server (1) and then returning a success response to the participant function server (2) and the terminal if the controller function server (1) determines that a group corresponding to the group session participation request is a participative group from a group server and authenticates the group session participation request successfully; and
if other subsequent terminals require to participate in the predefined group session by sending a group session participation request, sending respective group session participation request of the other terminals to the controller function server (1), and returning a conversation identifier and a contribution identifier by the controller function server (1) to the other terminals via a response message if the controller function server (1) determines there are the conversation identifier and the contribution identifier corresponding to the existing group session and authenticates the group session participation request successfully;
**characterized in that**, the method further comprises:
receiving, by the other terminals, the conversation identifier and the contribution identifier and updating, by the other terminals, a local conversation identifier and a local contribution identifier to be the ones received by each of the other terminals;
and **in that** the process of storing the conversation identifier and the contribution identifier by the controller function server (1) further comprises:
if the controller function server (1) determines that the terminal is a first terminal that participates in the predefined group and the group session participation request received by the controller function server (1) is of a participative group type, storing the conversation identifier and the contribution identifier contained in the group session participation request by the controller function server (1), and, if requesting to participate in the predefined group session, the other terminals send a group session participation request according to the updated conversation identifier and contribution identifier so as to participate in the same group session.

## Patentansprüche

1. Realisierungsverfahren zum Teilnehmen an einer vorgegebenen Gruppensitzung, wobei das Verfahren umfasst:
Empfangen (S202) einer von einem Endgerät gesendeten Gruppensitzungs-Teilnahmeanforderung durch einen Steuerungsfunktions-Server (1), wobei die Gruppensitzungs-Teilnahmeanforderung eine Konversationskennung und eine Beitragskennung trägt; und
Senden (S204) der Konversationskennung und der Beitragskennung an andere Endgeräte, welche an einer vorgegebenen Gruppensitzung teilnehmen, anschließend durch den Steuerungsfunktions-Server (1);
**dadurch gekennzeichnet, dass** das Verfahren ferner umfasst:
Empfangen der Konversationskennung und der Beitragskennung durch die anderen Endgeräte und Aktualisieren einer lokalen Konversationskennung und einer lokalen Beitragskennung auf die empfangenen durch die anderen Endgeräte,
und dass, nachdem der Steuerungsfunktions-Server (1) die von dem Endgerät gesendete Gruppensitzungs-Teilnahmeanforderung empfängt, das Verfahren ferner umfasst:
wenn der Steuerungsfunktions-Server (1) bestimmt, dass das Endgerät ein erstes Endgerät ist, welches an der vorgegebenen Gruppe teilnimmt, und die von dem Steuerungsfunktions-Server (1) empfangene Gruppensitzungs-Teilnahmeanforderung eine eines Teilnahmegruppentyps ist, Speichern der Konversationskennung und der Beitragskennung, die in der Gruppensitzungs-Teilnahmeanforderung enthalten sind, durch den Steuerungsfunktions-Server (1), und
wenn angefordert wird, an der vorgegebenen Gruppensitzung teilzunehmen, Senden einer Gruppensitzungs-Teilnahmeanforderung gemäß der aktualisierten Konversationskennung und Beitragskennung durch die anderen Endgeräte, um an derselben Gruppensitzung teilzunehmen.

2. Verfahren nach Anspruch 1, wobei das Verfahren, bevor der Steuerungsfunktions-Server (1) die Gruppensitzungs-Teilnahmeanforderung empfängt, ferner umfasst:
Empfangen der von dem Endgerät gesendeten Gruppensitzungs-Teilnahmeanforderung und Prüfen der Berechtigung des Endgeräts gemäß der Gruppensitzungs-Teilnahmeanforderung durch einen Teilnehmerfunktions-Server (2) und
Senden der Gruppensitzungs-Teilnahmeanforderung an den Steuerungsfunktions-Server (1) durch den Teilnehmerfunktions-Server (2), wenn ein Ergebnis der Berechtigungsprüfung zeigt, dass das Endgerät berechtigt ist.

3. Verfahren nach Anspruch 1, wobei das Verfahren, bevor der Steuerungsfunktions-Server (1) die Konversationskennung und die Beitragskennung an die anderen Endgeräte sendet, ferner umfasst:
Prüfen der Berechtigung des Endgeräts durch den Steuerungsfunktions-Server (1) gemäß der Gruppensitzungs-Teilnahmeanforderung, um eine Bestimmung vorzunehmen, ob die Teilnahme des Endgeräts an der vorgegebenen Gruppensitzung zugelassen wird; und
Speichern der Konversationskennung und der Beitragskennung durch den Steuerungsfunktions-Server (1), wenn das Ergebnis der Bestimmung ist, dass die Teilnahme des Endgeräts an der vorgegebenen Gruppensitzung zugelassen wird, so dass anschließend die Konversationskennung und die Beitragskennung an die anderen Endgeräte gesendet werden können.

4. Verfahren nach Anspruch 3, wobei das Verfahren, wenn das Ergebnis der Bestimmung ist, dass die Teilnahme des Endgeräts an der vorgegebenen Gruppensitzung zugelassen wird, ferner umfasst:
Zurücksenden einer Erfolgsmeldung, welche die erfolgreiche Teilnahme des Endgeräts an der vorgegebenen Gruppensitzung anzeigt, an das Endgerät durch den Steuerungsfunktions-Server (1).

5. Verfahren nach Anspruch 1, wobei das Verfahren, nachdem der Steuerungsfunktions-Server (1) die von dem Endgerät gesendete Gruppensitzungs-Teilnahmeanforderung empfängt, ferner umfasst:
wenn das Endgerät nicht das erste Endgerät ist, das an der vorgegebenen Gruppensitzung teilnimmt, und/oder die von dem Steuerungsfunktions-Server empfangene Gruppensitzungs-Teilnahmeanforderung nicht eine eines Teilnahmegruppentyps ist, Ignorieren der Konversationskennung und der Beitragskennung, die in der Gruppensitzungs-Teilnahmeanforderung enthalten sind, durch den Steuerungsfunktions-Server (1).

6. Verfahren nach Anspruch 1, wobei das Verfahren, nachdem die anderen Endgeräte die Aktualisierung abschließen, ferner umfasst:
wenn irgendeines der anderen Endgeräte wünscht, an der vorgegebenen Teilnahmegruppensitzung teilzunehmen, Senden einer Gruppensitzungs-Teilnahmeanforderung gemäß der aktualisierten Konversationskennung und Beitragskennung durch das Endgerät, welches dies wünscht.

7. Verfahren nach Anspruch 1, wobei der Steuerungsfunktions-Server (1) die Konversationskennung und die Beitragskennung an das Endgerät sendet, wenn das Endgerät wiederholt an der vorgegebenen Gruppensitzung teilnimmt.

8. Verfahren nach einem der Ansprüche 1 - 7, wobei das Endgerät und die anderen Endgeräte Clients konvergierter Dienste von Gruppensitzungsbenutzern sind.

9. Verfahren nach einem der Ansprüche 1 - 7, wobei die von dem Endgerät gesendete Gruppensitzungs-Teilnahmeanforderung ferner eine Kennung der Gruppensitzung umfasst.

10. Verfahren nach einem der Ansprüche 1 - 7, wobei die anderen Endgeräte, die anschließend an der Sitzung teilnehmen, diejenigen sind, die zum ersten Mal an der vorgegebenen Gruppensitzung teilnehmen, oder diejenigen sind, die erneut an der vorgegebenen Gruppensitzung teilnehmen, nachdem sie die vorgegebene Gruppensitzung verlassen haben.

11. Realisierungssystem zum Teilnehmen an einer vorgegebenen Gruppensitzung, wobei das System umfasst:
ein Empfangsmodul (11), welches auf einer Steuerungsfunktions-Server(1)-Seite dafür eingestellt ist, eine Gruppensitzungs-Teilnahmeanforderung zu empfangen, die von einem Endgerät gesendet wird, wobei die Gruppensitzungs-Teilnahmeanforderung eine Konversationskennung und eine Beitragskennung trägt; und
ein Sendemodul (12), welches auf der Steuerungsfunktions-Server(1)-Seite dafür eingestellt ist, die Konversationskennung und die Beitragskennung an andere Endgeräte zu senden, die anschließend an einer vorgegebenen Gruppensitzung teilnehmen;
**dadurch gekennzeichnet, dass** jedes der anderen Endgeräte die Konversationskennung und die Beitragskennung empfängt und eine lokale Konversationskennung und eine lokale Beitragskennung auf die empfangenen aktualisiert;
und dass das Empfangsmodul (11) ferner für Folgendes konfiguriert ist:
wenn es bestimmt, dass das Endgerät ein erstes Endgerät ist, welches an der vorgegebenen Gruppe teilnimmt, und die von dem Empfangsmodul (11) empfangene Gruppensitzungs-Teilnahmeanforderung eine eines Teilnahmegruppentyps ist, Speichern der Konversationskennung und der Beitragskennung, die in der Gruppensitzungs-Teilnahmeanforderung enthalten sind, und
wenn es anfordert, an der vorgegebenen Gruppensitzung teilzunehmen, Senden einer Gruppensitzungs-Teilnahmeanforderung gemäß der aktualisierten Konversationskennung und Beitragskennung durch die anderen Endgeräte, um an derselben Gruppensitzung teilzunehmen.

12. System nach Anspruch 11, ferner umfassend:
einen Teilnehmerfunktions-Server (2), welcher zum Empfangen der Gruppensitzungs-Teilnahmeanforderung benutzt wird und welcher die Berechtigung des Endgeräts gemäß der Gruppensitzungs-Teilnahmeanforderung prüft und die Gruppensitzungs-Teilnahmeanforderung an das Empfangsmodul sendet, wenn ein Ergebnis der Berechtigungsprüfung zeigt, dass das Endgerät berechtigt ist.

13. Realisierungsverfahren zum Teilnehmen an einer vorgegebenen Gruppensitzung, umfassend:
Senden einer Gruppensitzungs-Teilnahmeanforderung an einen Teilnehmerfunktions-Server (2) durch ein Endgerät, wobei die Gruppensitzungs-Teilnahmeanforderung eine Kennung darunter eine Gruppensitzung, eine Konversationskennung und eine Beitragskennung trägt;
Prüfen der Zulässigkeit der Gruppensitzungs-Teilnahmeanforderung durch den Teilnehmerfunktions-Server (2) und Ablehnen der Gruppensitzungs-Teilnahmeanforderung, wenn ein Ergebnis der Prüfung zeigt, dass die Gruppensitzungs-Teilnahmeanforderung unzulässig ist, anderenfalls Weiterleiten der Gruppensitzungs-Teilnahmeanforderung an einen Steuerungsfunktions-Server (1), zu welchem die vorgegebene Gruppe gehört;
Speichern der Konversationskennung und der Beitragskennung durch den Steuerungsfunktions-Server (1) und anschließendes Zurücksenden einer Erfolgsmeldung an den Teilnehmerfunktions-Server (2) und das Endgerät, wenn der Steuerungsfunktions-Server (1) bestimmt, dass eine Gruppe, welche der Gruppensitzungs-Teilnahmeanforderung entspricht, eine Teilnahmegruppe von einem Gruppen-Server ist, und erfolgreich die Berechtigung der Gruppensitzungs-Teilnahmeanforderung prüft; und
wenn anschließend andere Endgeräte durch Senden einer Gruppensitzungs-Teilnahmeanforderung an der vorgegebenen Gruppensitzung teilnehmen müssen, Senden der entsprechenden Gruppensitzungs-Teilnahmeanforderung der anderen Endgeräte an den Steuerungsfunktions-Server (1) und Zurücksenden einer Konversationskennung und einer Beitragskennung durch den Steuerungsfunktions-Server (1) an die anderen Endgeräte über eine Antwortmeldung, wenn der Steuerungsfunktions-Server (1) bestimmt, dass die Konversationskennung und die Beitragskennung vorliegen, die der existierenden Gruppensitzung entsprechen, und erfolgreich die Berechtigung der Gruppensitzungs-Teilnahmeanforderung prüft;
**dadurch gekennzeichnet, dass** das Verfahren ferner umfasst:
Empfangen der Konversationskennung und der Beitragskennung durch die anderen Endgeräte und Aktualisieren einer lokalen Konversationskennung und einer lokalen Beitragskennung auf die empfangenen durch die anderen Endgeräte,
und dass das Verfahren des Speicherns der Konversationskennung und der Beitragskennung durch den Steuerungsfunktions-Server (1) ferner umfasst:
wenn der Steuerungsfunktions-Server (1) bestimmt, dass das Endgerät ein erstes Endgerät ist, welches an der vorgegebenen Gruppe teilnimmt, und die von dem Steuerungsfunktions-Server (1) empfangene Gruppensitzungs-Teilnahmeanforderung eine eines Teilnahmegruppentyps ist, Speichern der Konversationskennung und der Beitragskennung, die in der Gruppensitzungs-Teilnahmeanforderung enthalten sind, durch den Steuerungsfunktions-Server (1), und
wenn angefordert wird, an der vorgegebenen Gruppensitzung teilzunehmen, Senden einer Gruppensitzungs-Teilnahmeanforderung gemäß der aktualisierten Konversationskennung und Beitragskennung durch die anderen Endgeräte, um an derselben Gruppensitzung teilzunehmen.

## Revendications

1. Procédé de réalisation pour participer à une session de groupe prédéfinie, le procédé comprenant :
la réception (S202), par un serveur de fonction de contrôleur (1), d'une demande de participation de session de groupe envoyée par un terminal, dans lequel la demande de participation de session de groupe porte un identifiant de conversation et un identifiant de contribution ; et l'envoi (S204) de l'identifiant de conversation et de l'identifiant de contribution à d'autres terminaux qui participent ensuite à une session de groupe prédéfinie par le serveur de fonction de contrôleur (1) ;
**caractérisé en ce que** le procédé comprend en outre :
la réception, par les autres terminaux, de l'identifiant de conversation et de l'identifiant de contribution et la mise à jour, par les autres terminaux, d'un identifiant de conversation local et d'un identifiant de contribution local étant ceux reçus par chacun des autres terminaux ;
et **en ce que**, après que le serveur de fonction de contrôleur (1) reçoit la demande de participation de session de groupe envoyée par le terminal, le procédé comprend en outre :
si le serveur de fonction de contrôleur (1) détermine que le terminal est un premier terminal qui participe au groupe prédéfini et la demande de participation de session de groupe reçue par le serveur de fonction de contrôleur (1) est d'un type de groupe participatif, la mémorisation de l'identifiant de conversation et de l'identifiant de contribution contenus dans la demande de participation de session de groupe par le serveur de fonction de contrôleur (1), et
en cas de demande de participation à la session de groupe prédéfinie, les autres terminaux envoient une demande de participation de session de groupe en fonction de l'identifiant de conversation mis à jour et de l'identifiant de contribution mis à jour de manière à participer à la même session de groupe.

2. Procédé selon la revendication 1, avant que le serveur de fonction de contrôleur (1) ne reçoive la demande de participation de session de groupe, le procédé comprenant en outre :
la réception de la demande de participation de session de groupe envoyée par le terminal et l'authentification du terminal en fonction de la demande de participation de session de groupe par un serveur de fonction de participant (2) ; et
l'envoi de la demande de participation de session de groupe au serveur de fonction de contrôleur (1) par le serveur de fonction de participant (2) si un résultat de l'authentification indique que le terminal est licite.

3. Procédé selon la revendication 1, avant que le serveur de fonction de contrôleur (1) n'envoie l'identifiant de conversation et l'identifiant de contribution aux autres terminaux, le procédé comprenant en outre :
l'authentification du terminal par le serveur de fonction de contrôleur (1) en fonction de la demande de participation de session de groupe de manière à effectuer une détermination s'il faut permettre la participation du terminal à la session de groupe prédéfinie ; et
la mémorisation de l'identifiant de conversation et de l'identifiant de contribution par le serveur de fonction de contrôleur (1) si le résultat de la détermination est que la participation du terminal à la session de groupe prédéfinie est autorisée de sorte que l'identifiant de conversation et l'identifiant de contribution puissent être ensuite envoyés aux autres terminaux.

4. Procédé selon la revendication 3, si le résultat de la détermination est que la participation du terminal à la session de groupe prédéfinie est autorisée, le procédé comprenant en outre :
le retour d'une réponse de réussite indiquant la participation réussie du terminal à la session du groupe prédéfinie au terminal par le serveur de fonction de contrôleur (1).

5. Procédé selon la revendication 1, après que le serveur de fonction de contrôleur (1) reçoit la demande de participation de session de groupe envoyée par le terminal, le procédé comprend en outre :
si le terminal n'est pas le premier terminal qui participe à la session de groupe prédéfinie et/ou la demande de participation de session de groupe reçue par le serveur de fonction de contrôleur n'est pas d'un type de groupe participatif, ignorer l'identifiant de conversation et l'identifiant de contribution contenus dans la demande de participation de session de groupe par le serveur de fonction de contrôleur (1).

6. Procédé selon la revendication 1, après que les autres terminaux ont terminé la mise à jour, le procédé comprenant en outre :
si l'un quelconque des autres terminaux souhaite participer à la session de groupe participatif prédéfinie, l'envoi d'une demande de participation de session de groupe en fonction de l'identifiant de conversation mis à jour et de l'identifiant de contribution mis à jour par celui qui souhaite y participer.

7. Procédé selon la revendication 1, dans lequel le serveur de fonction de contrôleur (1) envoie à répétition l'identifiant de conversation et l'identifiant de contribution au terminal si le terminal participe à la session de groupe prédéfinie.

8. Procédé selon l'une quelconque des revendications 1 - 7, dans lequel le terminal et les autres terminaux sont des clients de services convergés d'utilisateurs de session de groupe.

9. Procédé selon l'une quelconque des revendications 1 - 7, dans lequel la demande de participation de session de groupe envoyée par le terminal comprend en outre un identifiant de la session de groupe.

10. Procédé selon l'une quelconque des revendications 1 - 7, dans lequel les autres terminaux participant ensuite à la session sont ceux qui participent à la session de groupe prédéfinie pour la première fois ou ceux qui participent à nouveau à la session de groupe prédéfinie après être sortis de la session de groupe prédéfinie.

11. Système de réalisation pour participer à une session de groupe prédéfinie, le système comprenant :
un module de réception (11) qui est réglé sur un côté de serveur de fonction de contrôleur (1) pour effectuer la réception d'une demande de participation de session de groupe envoyée par un terminal, dans lequel la demande de participation de session de groupe porte un identifiant de conversation et un identifiant de contribution ; et
un module d'envoi (12) qui est réglé sur le côté de serveur de fonction de contrôleur (1) pour effectuer l'envoi de l'identifiant de conversation et de l'identifiant de contribution à d'autres terminaux qui participent ensuite à une session de groupe prédéfinie ;
**caractérisé en ce que** chacun des autres terminaux effectue la réception de l'identifiant de conversation et de l'identifiant de contribution et la mise à jour d'un identifiant de conversation local et d'un identifiant de contribution local étant ceux reçus ;
et **en ce que** le module de réception (11) est en outre configuré pour effectuer :
en cas de détermination que le terminal est un premier terminal qui participe au groupe prédéfini et la demande de participation de session de groupe reçue par le module de réception (11) est d'un type de groupe participatif, la mémorisation de l'identifiant de conversation et de l'identifiant de contribution contenus dans la demande de participation de session de groupe, et
en cas de demande de participation à la session de groupe prédéfinie, les autres terminaux envoient une demande de participation de session de groupe en fonction de l'identifiant de conversation mis à jour et de l'identifiant de contribution mis à jour de manière à participer à la même session de groupe.

12. Système selon la revendication 11, comprenant en outre :
un serveur de fonction de participant (2), utilisé pour effectuer la réception de la demande de participation de session de groupe, l'authentification du terminal en fonction de la demande de participation de session de groupe et l'envoi de la demande de participation de session de groupe au module de réception si un résultat de l'authentification indique que le terminal est licite.

13. Procédé de réalisation pour participer à une session de groupe prédéfinie, comprenant :
l'envoi d'une demande de participation de session de groupe à un serveur de fonction de participant (2) par un terminal, dans lequel la demande de participation de session de groupe porte un identifiant incluant un identifiant de session de groupe, un identifiant de conversation et un identifiant de contribution ;
la vérification si la demande de participation de session de groupe est licite par le serveur de fonction de participant (2), et le rejet de la demande de participation de session de groupe si un résultat de la vérification indique que la demande de participation de session de groupe est illicite, sinon le transfert de la demande de participation de session de groupe à un serveur de fonction de contrôleur (1) auquel un groupe prédéfini s'attache ;
la mémorisation de l'identifiant de conversation et de l'identifiant de contribution par le serveur de fonction de contrôleur (1) puis le retour d'une réponse de réussite au serveur de fonction de participant (2) et au terminal si le serveur de fonction de contrôleur (1) détermine qu'un groupe correspondant à la demande de participation de session est un groupe participatif à partir d'un serveur de groupe et authentifie la demande de participation de session de groupe avec succès ; et
si d'autres terminaux suivants demandent à participer à la session de groupe prédéfinie par l'envoi d'une demande de participation de session de groupe, l'envoi d'une demande de participation de session de groupe respective des autres terminaux au serveur de fonction de contrôleur (1), et le retour d'un identifiant de conversation et d'un identifiant de contribution par le serveur de fonction de contrôleur (1) aux autres terminaux par l'intermédiaire d'un message de réponse si le serveur de fonction de contrôleur (1) détermine qu'il s'agit de l'identifiant de conversation et de l'identifiant de contribution correspondant à la session de groupe existante et authentifie la demande de participation de session de groupe avec succès ;
**caractérisé en ce que** le procédé comprend en outre:
la réception, par les autres terminaux, de l'identifiant de conversation et de l'identifiant de contribution et la mise à jour, par les autres terminaux, d'un identifiant de conversation local et d'un identifiant de contribution local étant ceux reçus par chacun des autres terminaux ;
et **en ce que** le processus de mémorisation de l'identifiant de conversation et de l'identifiant de contribution par le serveur de fonction de contrôleur (1) comprend en outre :
si le serveur de fonction de contrôleur (1) détermine que le terminal est un premier terminal qui participe au groupe prédéfini et la demande de participation de session de groupe reçue par le serveur de fonction de contrôleur (1) est d'un type de groupe participatif, la mémorisation de l'identifiant de conversation et de l'identifiant de contribution contenus dans la demande de participation de session de groupe par le serveur de fonction de contrôleur (1), et
en cas de demande de participation à la session de groupe prédéfinie, les autres terminaux envoient une demande de participation de session de groupe en fonction de l'identifiant de conversation mis à jour et de l'identifiant de contribution mis à jour de manière à participer à la même session de groupe.
